(19) **Europäisches Patentamt**
**European Patent Office**
**Office européen des brevets**

(11) **EP 2 312 819 B1**

(12) **EUROPEAN PATENT SPECIFICATION**

(45) Date of publication and mention
of the grant of the patent:
**11.09.2013 Bulletin 2013/37**

(51) Int Cl.:
*H04M 3/51* (2006.01)          *H04M 3/36* (2006.01)

(21) Application number: **09809189.5**

(22) Date of filing: **14.05.2009**

(86) International application number:
**PCT/CN2009/071796**

(87) International publication number:
**WO 2010/022604 (04.03.2010 Gazette 2010/09)**

(54) **A METHOD, APPARATUS AND SYSTEM FOR PROCESSING OUTBOUND CALLS**

VERFAHREN, VORRICHTUNG UND SYSTEM ZUR VERARBEITUNG AUSGEHENDER ANRUFE

PROCÉDÉ, APPAREIL ET SYSTÈME DE TRAITEMENT D APPELS SORTANTS

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **26.08.2008 CN 200810146901**

(43) Date of publication of application:
**20.04.2011 Bulletin 2011/16**

(73) Proprietor: **Huawei Technologies Co., Ltd.**
**Longgang District, Shenzhen**
**Guangdong 518129 (CN)**

(72) Inventor: **ZHANG, Pu**
**Longgang District**
**Shenzhen 518129 (CN)**

(74) Representative: **Thun, Clemens et al**
**Mitscherlich & Partner**
**Patent- und Rechtsanwälte**
**Sonnenstrasse 33**
**80331 München (DE)**

(56) References cited:
**WO-A1-2008/008117       CN-A- 1 602 030**
**CN-A- 1 832 515            US-A- 5 815 566**
**US-A1- 2005 096 912**

**Description**

FIELD OF THE INVENTION

The invention relates to communication technologies, and in particular, to a method, an apparatus, and a system for processing outbound calls.

BACKGROUND

An outbound call processing technology is: An outbound call system makes a call to a user, and, after the call is put through, the system forwards the call to an attendant for interacting with the user. The outbound call processing technology includes a predictive outbound call technology. In the predictive outbound call technology, when an outbound call system makes an outbound call, the outbound call system detects parameters in the outbound call process; and calculates the speed of the next outbound call according to the parameters involved in this outbound call process, namely, the number of called users of the next outbound call.

In the predictive outbound call system in the prior art, a monitoring module is responsible for obtaining the parameters in this outbound call process and the information about events triggered by the call (such as ringing event and off-hook event), and sending the parameters and information to a predicting module. The parameters involved in this outbound call process may include: total number of attendants signed in currently, total number of trunks currently available for outbound calls, number of currently idle attendants, number of calls that are not off-hook currently, average off-hook duration of called users, called user off-hook ratio, number of currently queued calls, number of calls that are under conversation currently, and average processing duration of attendants. A predicting module is responsible for calculating the speed of the next outbound call according to the parameters provided by the monitoring module. An outbound call task management module is responsible for performing an outbound call task according to the outbound call speed provided by the predicting module.

However, the following drawbacks have become apparent in the prior art: After some called users join the conversation, they are not interested in the purpose of this outbound call and therefore disconnect the call, which leads to waste of time of the attendant.

The application with Pub.No.US2005/0096912 A1, has disclosed a contact classifier to classify the contact as either a person or a non-person. If the contact is a person, the call manager retrieves a predetermined dialog from a dialog database. The dialog actually retrieved depends upon the call center's purpose and the attributes of the contact.

SUMMARY

The invention provides a method, an apparatus, and a system for processing outbound calls to filter out the called users who are not interested in the purpose of the outbound call and therefore improve the efficiency of attendants.

The objectives of the invention are fulfilled through the following technical solution:

A method for processing outbound calls according to the first aspect of the invention includes:

receiving feedback information from a called user after the called user goes off-hook;
detecting whether the called user that goes off-hook is an actual person, according to the feedback information; if so, playing outbound call information that carries a purpose of the outbound call to the actual person called user; and detecting, whether the called user that is an actual person decides to interact with the attendant according to the outbound call information; if the called user decides not to interact with the attendant, disconnecting the call; further characterized by:

detecting (104) parameters involved in an outbound call process; and
adjusting (104) speed of originating outbound calls according to the parameters;
wherein the adjusting of the speed of outbound calls according to the parameters comprises:

calculating a predicted number of called users of a next outbound call according to the detected parameters; and
judging whether the sum of the predicted number of called users of the next outbound call, the number of calls that are not off-hook currently, the number of calls that are queued currently, and the number of calls that are under conversation currently is greater than the total number of trunks currently available for outbound calls; if the sum is greater than the total number of trunks, the number of called users of the next outbound call is equal to a difference obtained by subtracting the sum of the number of calls that are not off-hook currently, the number of calls that are queued currently, and the number of calls that are under conversation currently from the total number of trunks currently available for outbound calls;
if the sum is less than or equal to the total number of trunks, the number of called users of the next outbound call is equal to the predicted number of called users of the next outbound call;
wherein the calculating of the predicted number of called users of the next outbound call according to the detected parameters comprises:

multiplying the outbound call period by the total number of attendants signed in currently, and by a conversation ratio of attendants to obtain the processing capability available from attendants, wherein the outbound call period is the sum of the average duration of forwarding the call to the attendant and the average processing duration of the attendants;
multiplying the number of calls that are not off-hook currently by the actual person off-hook ratio, and by the average processing duration of attendants to obtain the capability required by non-off-hook calls;
multiplying the number of calls that are under conversation currently by the average processing duration of 1/2 of the attendants to obtain the average processing capability required by the calls under conversation;
multiplying the number of currently queued calls by the average processing duration of attendants to obtain the capability required by queued calls;
adding the capability required by non-off-hook calls to the average processing capability required by calls under conversation, and to the capability required by the queued calls to obtain a sum, wherein the sum is subtracted from the processing capability available from attendants to obtain the remaining processing capability; and
multiplying the remaining processing capability by traffic processing efficiency to obtain a first product, and multiplying the actual person off-hook ratio by the average processing duration of attendants to obtain a second product, and dividing the first product by the second product to obtain the predicted number of called users of the next outbound call, wherein the traffic processing efficiency is preset.

An apparatus for processing outbound calls according to the second aspect of the invention includes:

a detecting unit, configured to detect whether a called user that goes off-hook is an actual person, according to feedback information returned by the called user after the called user goes off-hook;
a playing unit, configured to play outbound call information that carries a purpose of the outbound call to the called user if the detecting unit determines that the called user that goes off-hook is an actual person; and
a filtering out, configured to disconnect the call if the called user decides not to interact with the attendant according to the outbound call information; and further characterized by:

a predicting unit (304), configured to: detect parameters involved in an outbound call process, and adjust speed of the outbound calls according to the parameters, wherein the parameters involved in the outbound call process comprise average duration of forwarding the call to the attendant and actual person off-hook ratio; wherein the average duration of forwarding the call to the attendant is average duration from "originating the outbound call to the called user" to "the actual person called user choosing to forward the call to the attendant"; and the actual person off-hook ratio is a ratio of the actual person called users choosing to forward the call to the attendant;
wherein the adjusting of the speed of outbound calls according to the parameters comprises:

calculating a predicted number of called users of a next outbound call according to the detected parameters; and
judging whether the sum of the predicted number of called users of the next outbound call, the number of calls that are not off-hook currently, the number of calls that are queued currently, and the number of calls that are under conversation currently is greater than the total number of trunks currently available for outbound calls; if the sum is greater than the total number of trunks, the number of called users of the next outbound call is equal to a difference obtained by subtracting the sum of the number of calls that are not off-hook currently, the number of calls that are queued currently, and the number of calls that are under conversation currently from the total number of trunks currently available for outbound calls;
if the sum is less than or equal to the total number of trunks, the number of called users of the next outbound call is equal to the predicted number of called users of the next outbound call;
wherein the calculating of the predicted number of called users of the next outbound call according to the detected parameters comprises:

multiplying the outbound call period by the total number of attendants signed in currently, and by a conversation ratio of attendants to obtain the processing capability available from attendants, wherein the outbound call period is the sum of the average duration of forwarding the call to the attendant and the average processing duration of the attendants;

multiplying the number of calls that are not off-hook currently by the actual person off-hook ratio, and by the average processing duration of attendants to obtain the capability required by non-off-hook calls;

multiplying the number of calls that are under conversation currently by the average processing duration of 1/2 of the attendants to obtain the average processing capability required by the calls under conversation;

multiplying the number of currently queued calls by the average processing duration of attendants to obtain the capability required by queued calls;

adding the capability required by non-off-hook calls to the average processing capability required by calls under conversation, and to the capability required by the queued calls to obtain a sum, wherein the sum is subtracted from the processing capability available from attendants to obtain the remaining processing capability; and

multiplying the remaining processing capability by traffic processing efficiency to obtain a first product, and multiplying the actual person off-hook ratio by the average processing duration of attendants to obtain a second product, and dividing the first product by the second product to obtain the predicted number of called users of the next outbound call, wherein the traffic processing efficiency is preset.

A system for processing outbound calls according to the third aspect of the invention includes an apparatus for processing outbound calls, and the apparatus is communicationally connected with the attendant.

The apparatus for processing outbound calls is configured to: detect whether a called user that goes off-hook is an actual person according to feedback information returned by the called user after the called user goes off-hook; if so, play outbound call information that carries a purpose of the outbound call to the actual person called user.

The apparatus for processing outbound calls is further configured to disconnect the call if the actual person called user decides not to interact with the attendant according to the outbound call information.

Compared with the prior outbound call technology, the invention forwards outbound call information to the called user that is an actual person, and therefore, the call is disconnected for the called user who is not interested in the purpose of this outbound call, and the actual person called user who is interested in the purpose of this outbound call interacts with the attendant. The time of the attendant is saved, and the work efficiency of the attendant is improved.

BRIEF DESCRIPTION OF THE DRAWINGS

In order to make the technical solution under the invention or the prior art clearer, the following describes the accompanying drawings that illustrate the embodiments of the invention or the prior art.

FIG. 1 is a flowchart of a method for processing outbound calls in an embodiment of the invention;
FIG. 2 is a flowchart of processing outbound calls in an embodiment of the invention;
FIG. 3 shows a structure of an apparatus for processing outbound calls in an embodiment of the invention; and
FIG. 4 shows a structure of a system for processing outbound calls in an embodiment of the invention.

DETAILED DESCRIPTION OF THE EMBODIMENTS

The following detailed description is provided in conjunction with the accompanying drawings in order to provide a thorough understanding of the invention. The drawings and the detailed description are merely exemplary embodiments of the invention, and the embodiments are regarded as illustrative in nature and not restrictive.

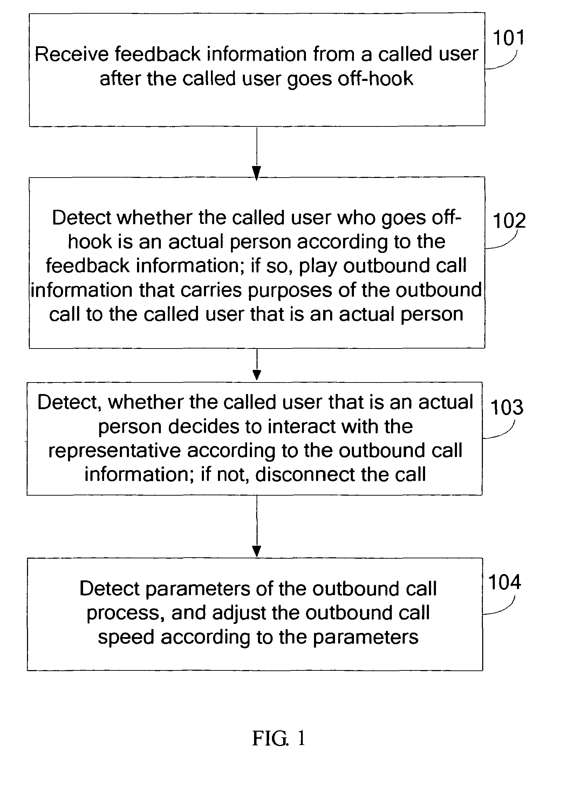

FIG. 1 is a flowchart of a method for processing outbound calls in an embodiment of the invention. The method includes the following steps:

Step 101: Receive feedback information from a called user after the called user goes off-hook.

For example, the off-hook operation may be performed by an actual person or by an automatic response device, and the feedback information received after the off-hook operation is performed may be answer information returned by the actual person or the automatic response device; the automatic response device that performs the off-hook operation may be a fax machine, a modem, or an answering machine; and the answer information may be voice of the called user that is an actual person that goes off-hook, or preset answer voice played by the automatic response device after the automatic response device goes off-hook.

Step 102: Detect whether the called user that goes off-hook is an actual person according to the feedback information; if so, play outbound call information that carries a purpose of the outbound call to the actual person called user.

An outbound call system detects whether the phone is picked up by an actual person according to the voice returned by an actual person or the preset answer voice played by an automatic response device. If the called user is an actual person,, the system plays outbound call information that may carry the purpose of the outbound call to the called user; otherwise, the system disconnects the call, without routing the call to an attendant, thus improving the work efficiency of the attendant.

Step 103: Detect whether the called user decides to interact with an attendant according to the outbound call information; if the called user decides not to interact with the attendant, disconnect the call.

If the called user that is an actual person is not interested in the purpose of the outbound call according to the outbound call information played by an outbound call system, the called user may disconnect the call. If the called user that is an actual person is interested in the purpose of the outbound call, the called user sends an instruction of interacting with an attendant to the outbound call system.

Step 104: Detect parameters of the outbound call process, and adjust the outbound call speed according to the parameters.

For example, the parameters of the outbound call process includes: total number of attendants signed in currently, total number of trunks currently available for outbound calls, number of currently idle attendants, number of calls that are not off-hook currently, average duration of forwarding the call to the attendant, actual person off-hook ratio, number of currently queued calls, number of calls that are under conversation currently, and average processing duration of attendants.

The average duration of forwarding the call to the attendant is the average duration from "originating the outbound call to the called user" to "the called user that is an actual person deciding to forward the call to the attendant".

The actual person off-hook ratio is the ratio of the called users that are actual persons choosing to forward the call to the attendant.

For example, the outbound call speed may be adjusted according to the parameters in the following way:

The outbound call period is multiplied by the total number of attendants signed in currently and then multiplied by the conversation ratio of attendants to obtain the processing capability available from attendants ; where the outbound call period is the sum of the average duration of forwarding a call to an attendant and the average processing duration of the attendants.

The number of calls that are not off-hook currently is multiplied by the actual person off-hook ratio, and then multiplied by the average processing duration of attendants to obtain the capability required by non-off-hook calls.

The number of calls that are under conversation currently is multiplied by the average processing duration of 1/2 of the attendants to obtain the average processing capability required by calls under conversation.

The number of currently queued calls is multiplied by the average processing duration of attendants to obtain the capability required by queued calls.

The capability required by non-off-hook calls is added to the average processing capability required by calls under conversation, and then added to the capability required by the queued calls to obtain a sum, and the sum is subtracted from the processing capability available from attendants to obtain the remaining processing capability.

The remaining processing capability is multiplied by the traffic processing efficiency to obtain a first product, and the actual person off-hook ratio is multiplied by the average processing duration of attendants to obtain a second product, and the first product is divided by the second product to obtain a predicted number of called users of the next outbound call.

A judgment is made about whether the sum of the predicted number of called users of the next outbound call, the number of calls that are not off-hook currently, the number of calls that are queued currently, and the number of calls that are under conversation currently is greater than the total number of trunks currently available for outbound calls. If the sum is greater than the total number of trunks available, the number of called users of the next outbound call is equal to a difference obtained by subtracting the number of calls that are not off-hook currently, the number of calls that are queued currently, and the number of calls that are under conversation currently from the total number of trunks currently available for outbound calls; if the sum is smaller than or equal to the total number of trunks available, the number of called users of the next outbound call is equal to the predicted number of called users calculated out.

It should be noted that, before step 101, the outbound call processing method provided in this embodiment may further include the following operations: originate an outbound call to the called user, and disconnect invalid calls from the called users. The details of disconnecting invalid calls for the called users may be:

According to the telecom signaling analysis or signal tone detection, the outbound call system disconnects the calls which are invalid, such as the called user is busy, the called user is not in the service area, the called user is a vacant number, the called user is powered off, or the called user does not answer, and so that such calls are not routed to the attendant. In this way, the work efficiency of the attendants is improved.

It should be noted that in step 103, after the called user that is an actual person decides to interact with the attendant according to the outbound call information and before the attendant interacts with the called user, the outbound call processing method provided in this embodiment may further include the following operations: judge whether the attendant is busy; if the attendant is busy, queue the call, and process the queued call when the attendant is idle; if the attendant is idle, start the interaction between the attendant and the called user. The call queuing mechanism is used to put the calls into a queue, where the calls are those the attendant is too busy to handle. When the attendant becomes idle, the attendant handles the queued calls. In addition, the outbound call system needs to control the ratio of queued calls and the waiting duration of queued calls to prevent embarrassment caused by too long silence time when the actual person called user is waiting.

Described above is an outbound call processing method in an embodiment of the invention. In this embodiment, outbound call information is played to the called user which is an actual person, and therefore, the called user who is not interested in the purpose of this outbound call is disconnected from the call, and the actual person called user who is interested in the purpose of this outbound call interacts with the attendant. In this way, the time of the attendant is saved, and the work efficiency of the attendant is improved.

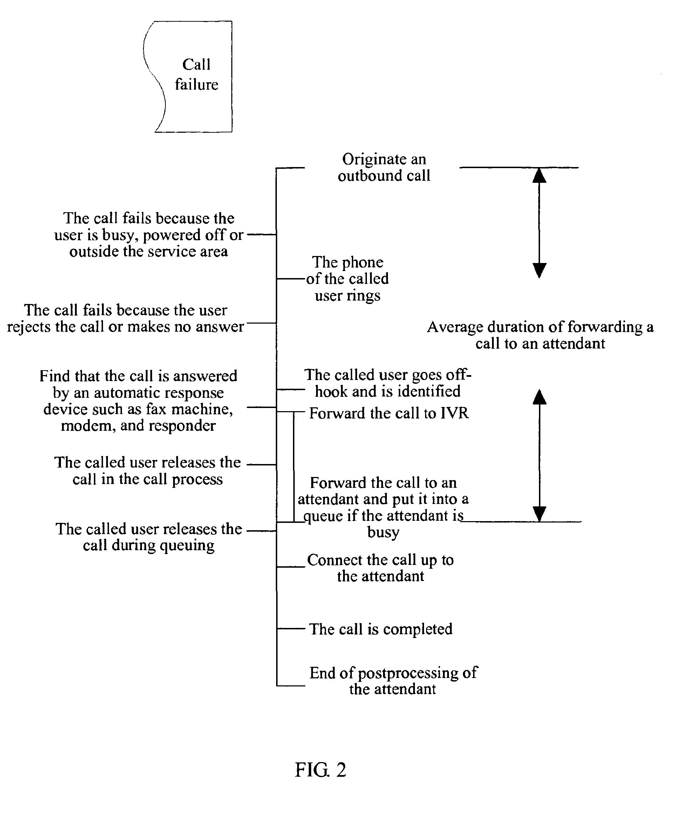

The following describes the outbound call processing method under the invention with reference to preferred embodiments. FIG. 2 is a flowchart of processing outbound calls in an embodiment of the invention. Compared with the predicting outbound call technology in the prior art, an Interactive Voice Response (IVR) device is added in this embodiment. The detected called user that is an actual person is routed to the IVR device, and the called users who are not interested in the purpose of this outbound call are further filtered out. The method provided in this embodiment may include the following steps:

(1) Origination of outbound calls to called users: The outbound call system originates calls at a certain speed according to outbound call policies. In a specific telecom network, some calls may be quickly disconnected when the called user is busy, the called user is not in the service area, the called user is a vacant number, or the called user is powered off; and the other calls enter the called user ringing stage.

(2) Called user ringing stage: Some calls are disconnected because of the reasons, such as the called user rejects the call, and the called user does not answer; and other calls enter the stage of hook-off and identification of called users.

(3) Hook-off and identification of called users: When the called user goes off-hook, the phone may be picked up by an actual person, or an automatic response device such as a fax machine, a modem, and a responder. The feedback information returned by the called user after the called user goes off-hook may be voice made by an actual person, or preset response voice played by an automatic response device after the called user goes off-hook.

The system detects whether the phone is picked up by an actual person according to the voice made by the called user that is an actual person or the preset response voice played by the automatic response device after the called user goes off-hook. Generally, the identification result comes out in two or three seconds or in 1, 2.5, 3.5, and 4 seconds, or 5 seconds, or 2-3 seconds. If the identification result shows that the phone is picked up by an the called user that is an actual person, the system routes the call to the IVR device to get filtered; if the phone is not picked up by an actual person, the outbound call system disconnects the call directly without routing it to the IVR device, improving the utilization ratio of attendants.

(4) Filtering on an IVR device: The IVR device plays outbound call information to the actual person called user; the outbound call information may include the purpose of the outbound call, and according to the information, the actual person called user decides whether to listen to the attendant, or sets other time for talking, or rejects and disconnects the outbound call. The actual person called users who reject to interact with the attendant are filtered out, and the calls of such users are not routed to the attendant, saving time and improving the work efficiency of the attendants. The calls of actual person called users who are interested in the outbound call are routed and queued if the attendant is busy and handle the calls later when the attendant is idle; or are routed to the attendant directly to interact with the attendant if the attendant is not busy.

(5) Queuing stage: This stage is not mandatory. If the called user that is an actual person is interested in the outbound call, and an idle attendant is available, the call enters the conversation stage and is handled by the attendant directly; if all attendants are busy, the call is put into a queue; at the queuing stage, the actual person called user may disconnect the call for various reasons, and the outbound call system needs to control the ratio of queued calls and the waiting duration of the queued calls and prevent disconnection caused by too long waiting duration.

(6) Conversation stage: If an idle attendant is available when calls are in the queue or a new call arrives, the call is routed to the idle attendant immediately and enters the conversation stage. The conversation stage comes in two scenarios. First scenario: if the attendant finds that the call is invalid (it is not detected that the call is picked up by an actual person), the attendant releases the call immediately; second scenario: the attendant provides the outbound call service for the called user, and the call enters the conversation stage.

(7) Post processing stage: After the attendant interacts with the actual person called user through the call and finishes the outbound call service, one party disconnects the call, and the conversation ends, the attendant then performs service post processing (optional). After the post processing is completed, the entire service process ends, and therefore the attendant becomes idle again and ready for handling new calls.

It should be noted that, in this embodiment, the call of the called user that is an actual person is routed to an IVR device, and the IVR device plays outbound call information to the called user, and filters out the calls of the called users who are not interested in the purpose of the outbound call. In an embodiment of the invention, an automatic playing device may be used in place of the IVR device to fulfill the objectives of the invention. The IVR device in this embodiment is regarded as illustrative in nature and not restrictive.

Described above is an outbound call processing method in an embodiment of the invention. In this embodiment, a device capable of automatically playing tone is added to disconnect the called users who are not interested in the purpose of this outbound call, and the called users that are actual persons who are interested in the purpose of this outbound call are routed to the attendant for interaction. In this way, the time of the attendant is saved, and the work efficiency of the attendant is improved.

In addition, the automatic playing device routes only the called users of actual person interested in the outbound call to the attendant for interaction. Compared with the predicting outbound call technology in the prior art, the outbound call processing method provided in this embodiment extends the average off-hook time of called users in the existing predicting outbound call technology, and reduces the called user off-hook ratio. According to the outbound call processing method in this embodiment, the outbound call speed can be adjusted properly according to the outbound call parameters to reduce the cost of outbound calls.

In an specific outbound call prediction algorithm, the traffic processing efficiency is defined as w=(actual traffic processing capability / traffic processing capability provided by all attendants). The traffic processing efficiency may be understood as work tenseness of the attendant. The traffic processing efficiency may be adjusted empirically or according to actual operation conditions, and it may be generally 80%. The objective of this algorithm is to fulfill the traffic processing efficiency index by controlling the outgoing call speed, and accomplish a tradeoff between the service efficiency and the service level.

The relevant outbound call parameters in the outbound call algorithm include:

A-total number of attendants signed in currently;
Y-total number of trunks currently available for outbound calls;
F-number of currently idle attendants;
C-number of calls that are not off-hook currently, namely, number of calls which are originated but not hooked off by the called user;
Z-average duration from originating the outbound call to the actual person called user choosing to forward the call to the attendant;
p-ratio of forwarding the call to attendants, where the numerator is the number of the actual person called users choosing to forward the call to the attendant in a prediction period, and the denominator is the total number of outbound calls;
B-number of calls that are queued currently;
D-number of calls that are under conversation currently, namely, the calls which are currently handled by the attendant;
β-conversation ratio of attendants, namely, ratio of the time of the conversation process of the attendant to the total time of the whole call processing process; and
L-average processing duration of attendants (from connecting the call to the attendant to end of postprocessing).

The outbound call control period is set to T (that is, L + Z). The outbound call prediction control is performed with reference to this period. In this way, the processing capability available from attendants is: $A \times T \times \beta$.

The capability required by the current call is calculated in the following way:

the capability required by non-off-hook calls is: $C \times p \times L$;
the average processing capability required by the calls under conversation is $D \times L / 2$;
the capability required by the queued calls is: $B \times L$;
therefore, the remaining processing capability is: $R = A \times T \times \beta - (C \times p + D / 2 + B) \times L$.

Assuming that the predicted total number of calls originated in the next period is P, the processing capability required by P calls is $E = P \times p \times L$. According to the definition of traffic processing efficiency, $w = E / R$, and therefore:

$$P = \frac{wR}{\rho L} = w\,\frac{AT\beta - (C\rho + \frac{D}{2} + B)L}{\rho L} \qquad (1)$$

After the predicted value P is calculated out according to equation (1), the outbound call system checks whether C+B+D+P is less than or equal to Y. If such is the case, the number of outbound calls in the next period is equal to the predicted value P; otherwise, if it is larger than Y, the number of outbound calls in the next period is Y - (C + B + D).

In equation (1), it is assumed that the P calls are originated simultaneously at the start point of the T period. In the practical outbound call control, an equalized outbound call mode is applied, the T period is divided into n stages, the parameters are detected at each stage, and the outbound call speed is adjusted properly.

Described above is an exemplary method of adjusting the outbound call speed according to the outbound call prediction algorithm and the outbound call parameters, and the duration of interaction on the IVR is taken into account in calculating the average duration of forwarding a call to an attendant Z; and the calls released during interaction with the IVR device are taken into account in calculating the outbound call failure ratio, reducing the actual person off-hook ratio p. The outbound call ratio is adjusted properly to minimize the cost of outbound calls, increase the percentage of valid calls, and improve the value of outbound calls.

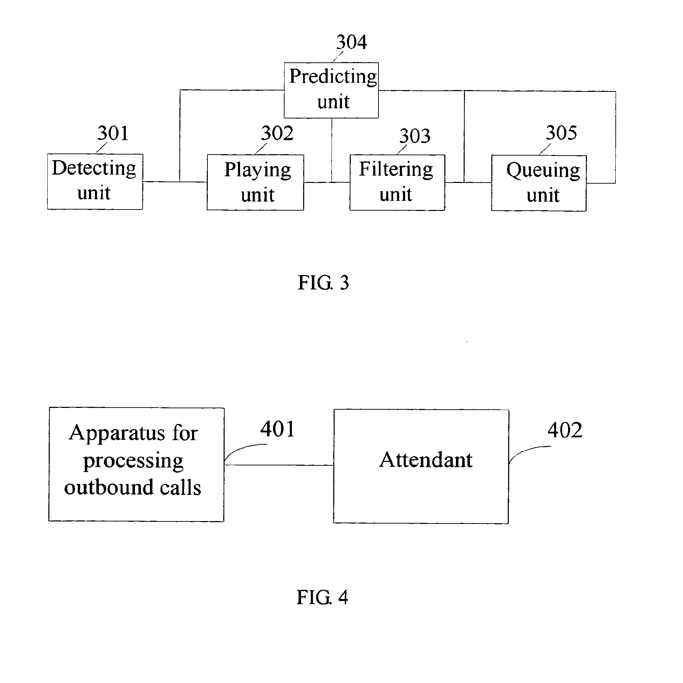

Corresponding to the outbound processing method above, an apparatus for processing outbound calls is provided in an embodiment of the invention. FIG. 3 shows a structure of an apparatus for processing outbound calls in an embodiment of the invention. As shown in FIG. 3, the apparatus may include: a detecting unit 301, a playing unit 302, a filtering unit 303, a predicting unit 304, and a queuing unit 305.

The detecting unit 301 is configured to: detect whether a called user that goes off-hook is an actual person, according to feedback information returned by the called user after the called user goes off-hook; if so, route the call to the playing unit, where the feedback information returned by the called user after the called user goes off-hook is voice made by the actual person or preset response voice played by an automatic response device.

The playing unit 302 is configured to play outbound call information to the called user that is an actual person, where the outbound call information includes a purpose of the outbound call.

The filtering unit 303 is configured to: route the call hooked off by the called user if the called user decides to interact with an attendant according to the purpose of the outbound call to the attendant for interaction; and disconnect the call hooked off by the called user if the called user decides not to interact with the attendant.

The predicting unit 304 is configured to: detect parameters involved in outbound calls, and adjust speed of the outbound calls according to the parameters, where the parameters involved in the outbound calls include average duration of forwarding the call to the attendant and actual person off-hook ratio.

In this case, the average duration of forwarding the call to the attendant is the average duration from "originating the outbound call to the called user" to "the actual person called user choosing to forward the call to the attendant".

The actual person off-hook ratio is the ratio of the actual person called users choosing to forward the call to the attendant.

The queuing unit 305 is configured to queue the calls hooked off by the actual person called users who decide to interact with the attendant, where the queued calls are processed when the attendant is idle.

In this case, the detecting unit 301 is further configured to detect whether a called user that goes off-hook is an actual person according to feedback information returned by the called user after the called user goes off-hook; if not, disconnect the call.

Described above is an outbound call processing apparatus in an embodiment of the invention. In this embodiment, outbound call information is played to the actual person called user, and therefore, the actual person called user who is not interested in the purpose of this outbound call is disconnected from the call, and the actual person called user who is interested in the purpose of this outbound call interacts with the attendant. In this way, the time of the attendant is saved, and the work efficiency of the attendant is improved.

The apparatus embodiment above is illustrative in nature. The units described as stand-alone components above may be separated physically or not; and the components illustrated as units may be physical units or not, namely, they may be located in one place, or distributed on multiple network elements. Some or all of the modules described above may be selected as required to fulfill the objectives of the technical solution under the invention, which can be understood and implemented by those skilled in the art without creative efforts.

The following describes an outbound call processing system provided in an embodiment of the invention with reference to the outbound call processing apparatus shown in FIG. 3. FIG. 4 shows a system for processing outbound calls in an embodiment of the invention. As shown in FIG. 4, the system for processing outbound calls in this embodiment may include an outbound call processing apparatus 401 which is communicationally connected with an attendant 402.

The outbound call processing apparatus 401 is configured to: detect whether a called user that goes off-hook is an actual person according to feedback information returned by the called user after the called user goes off-hook; if so, play outbound call information to the actual person called user, where the outbound call information includes a purpose of this outbound call, and feedback information returned by the called user after the called user goes off-hook is voice made by the actual person called user or preset response voice played by an automatic response device after the automatic response device goes off-hook.

The outbound call processing apparatus is further configured to: route the call hooked off by the actual person called user who decides to interact with an attendant according to the purpose of the outbound call to the attendant for interaction; and disconnect the call hooked off by the actual person called user who decides not to interact with the attendant.

The outbound call processing apparatus 401 is further configured to: detect parameters involved in outbound calls, and adjust speed of the outbound calls according to the parameters, where the parameters involved in the outbound calls include average duration of forwarding the call to the attendant and actual person off-hook ratio.

The average duration of forwarding the call to the attendant is the average duration from "originating the outbound call to the called user" to "the actual person called user choosing to forward the call to the attendant".

The actual person off-hook ratio is the ratio of the actual person called users choosing to forward the call to the attendant.

The outbound call processing apparatus 401 is further configured to queue the calls hooked off by the actual person called users who decide to interact with the attendant, whereupon the queued calls will be processed when the attendant is idle.

The outbound call processing apparatus 401 is further configured to detect whether a called user that goes off-hook is an actual person according to feedback information returned by the called user after the called user goes off-hook; if not, disconnect the call.

Described above is an outbound call processing system in an embodiment of the invention. In this embodiment, outbound call information is played to the actual person called user, and therefore, the actual person called user who is not interested in the purpose of this outbound call is disconnected from the call, and the actual person called user who is interested in the purpose of this outbound call interacts with the attendant. In this way, the time of the attendant is saved, and the work efficiency of the attendant is improved. Moreover, the outbound call processing system in this embodiment can adjust the outbound call speed properly according to the outbound call parameters to reduce the cost of outbound calls.

After reading the foregoing embodiments, persons skilled in the art are clearly aware that the embodiments of the invention may be implemented through hardware, or through software in addition to a necessary universal hardware platform. Therefore, the technical solution under the invention or its novelty in contrast to the prior art may be embodied in a software product. The software product is stored in a computer-readable storage medium such as ROM/RAM, magnetic disk and CD-ROM, and incorporates several instructions for instructing a computer device (for example, personal computer, server, or network device) to execute the method specified in each embodiment of the invention or part of the embodiment.

The embodiment or embodiments discussed above were chosen and described to enable better understanding of the principles of the invention. Although the invention is described through some exemplary embodiments, the invention is not limited to such embodiments.

## Claims

1. A method for processing outbound calls, comprising:

   receiving (101), by an apparatus for processing outbound calls, feedback information from a called user after the called user goes off-hook;
   detecting (102), by the apparatus for processing outbound calls, whether the called user that goes off-hook is an actual person, according to the feedback information; if the called user that goes off-hook is an actual person, playing outbound call information that carries a purpose of the outbound call to the actual person called user; and
   detecting (103), by the apparatus for processing outbound calls, whether the called user that is an actual person decides to interact with an attendant according to the outbound call information; if the called user decides not to interact with an attendant, disconnecting the call; further **characterized by**:
   detecting (104) parameters involved in an outbound call process; and
   adjusting (104) speed of originating outbound calls according to the parameters;
   wherein the adjusting of the speed of outbound calls according to the parameters comprises:

      calculating a predicted number of called users of a next outbound call period according to the detected parameters; and

judging whether the sum of the predicted number of called users of the next outbound call period, the number of calls that are not off-hook currently, the number of calls that are queued currently, and the number of calls that are under conversation currently is greater than the total number of trunks currently available for outbound calls; if the sum is greater than the total number of trunks, the number of called users of the next outbound call period is equal to a difference obtained by subtracting the sum of the number of calls that are not off-hook currently, the number of calls that are queued currently, and the number of calls that are under conversation currently from the total number of trunks currently available for outbound calls;

if the sum is less than or equal to the total number of trunks, the number of called users of the next outbound call period is equal to the predicted number of called users of the next outbound call period;

wherein the calculating of the predicted number of called users of the next outbound call period according to the detected parameters comprises:

> multiplying the outbound call period by the total number of attendants signed in currently, and by a conversation ratio of attendants to obtain the processing capability available from attendants, wherein the outbound call period is the sum of the average duration of forwarding the call to the attendant and the average processing duration of the attendants;
>
> multiplying the number of calls that are not off-hook currently by the actual person off-hook ratio, and by the average processing duration of attendants to obtain the capability required by non-off-hook calls;
>
> multiplying the number of calls that are under conversation currently by the average processing duration of 1/2 of the attendants to obtain the average processing capability required by the calls under conversation;
>
> multiplying the number of currently queued calls by the average processing duration of attendants to obtain the capability required by queued calls;
>
> adding the capability required by non-off-hook calls to the average processing capability required by calls under conversation, and to the capability required by the queued calls to obtain a sum, wherein the sum is subtracted from the processing capability available from attendants to obtain the remaining processing capability; and
>
> multiplying the remaining processing capability by traffic processing efficiency to obtain a first product, and multiplying the actual person off-hook ratio by the average processing duration of attendants to obtain a second product, and dividing the first product by the second product to obtain the predicted number of called users of the next outbound call period, wherein the traffic processing efficiency is preset.

2. The method according to claim 1, wherein the receiving (101) of the feedback information returned by the called user after the called user goes off-hook comprises:

> receiving voice information returned by the called user that is an actual person after the called user goes off-hook; or
>
> receiving preset response voice played by an automatic response device after the automatic response device goes off-hook.

3. The method according to claim 1, further comprising:

> disconnecting the call if the called user that goes off-hook is not an actual person according to the feedback information.

4. The method according to claim 1, further comprising:

> routing the call to the attendant for processing if it is detected that the called user that is an actual person decides to interact with the attendant according to the outbound call information.

5. The method according to claim 4, wherein if it is detected that the called user that is an actual person decides to interact with the attendant according to the outbound call information, the method further comprises:

> judging whether the attendant is busy; if the attendant is busy, queuing the call; if the attendant is not busy, routing the call to the attendant for processing.

6. The method of claim 1, wherein the parameters involved in the outbound call process comprise: average duration of forwarding the call to the attendant, and actual person off-hook ratio, wherein:

the average duration of forwarding the call to the attendant is an average duration from "originating the outbound call to the called user" to "the actual person called user choosing to forward the call to the attendant"; and

the actual person off-hook ratio is a ratio of the called users that are actual persons choosing to forward the call to the attendant.

7. An apparatus for processing outbound calls, comprising:

a detecting unit (301), configured to detect whether a called user that goes off-hook is an actual person, according to feedback information returned by the called user after the called user goes off-hook;

a playing unit (302), configured to play outbound call information that carries a purpose of the outbound call to the actual person called user if the detecting unit determines that the called user that goes off-hook is an actual person; and

a filtering unit (303), configured to disconnect the call if the actual person called user decides not to interact with an attendant according to the outbound call information; and further **characterized by**:

a predicting unit (304), configured to: detect parameters involved in an outbound call process, and adjust speed of the outbound calls according to the parameters, wherein the parameters involved in the outbound call process comprise average duration of forwarding the call to the attendant and actual person off-hook ratio; wherein

the average duration of forwarding the call to the attendant is average duration from "originating the outbound call to the called user" to "the actual person called user choosing to forward the call to the attendant"; and

the actual person off-hook ratio is a ratio of the actual person called users choosing to forward the call to the attendant;

wherein the adjusting of the speed of outbound calls according to the parameters comprises:

calculating a predicted number of called users of a next outbound call period according to the detected parameters; and

judging whether the sum of the predicted number of called users of the next outbound call period, the number of calls that are not off-hook currently, the number of calls that are queued currently, and the number of calls that are under conversation currently is greater than the total number of trunks currently available for outbound calls; if the sum is greater than the total number of trunks, the number of called users of the next outbound call period is equal to a difference obtained by subtracting the sum of the number of calls that are not off-hook currently, the number of calls that are queued currently, and the number of calls that are under conversation currently from the total number of trunks currently available for outbound calls;

if the sum is less than or equal to the total number of trunks, the number of called users of the next outbound call period is equal to the predicted number of called users of the next outbound call period,

wherein the calculating of the predicted number of called users of the next outbound call period according to the detected parameters comprises:

multiplying the outbound call period by the total number of attendants signed in currently, and by a conversation ratio of attendants to obtain the processing capability available from attendants, wherein the outbound call period is the sum of the average duration of forwarding the call to the attendant and the average processing duration of the attendants;

multiplying the number of calls that are not off-hook currently by the actual person off-hook ratio, and by the average processing duration of attendants to obtain the capability required by non-off-hook calls;

multiplying the number of calls that are under conversation currently by the average processing duration of 1/2 of the attendants to obtain the average processing capability required by the calls under conversation;

multiplying the number of currently queued calls by the average processing duration of attendants to obtain the capability required by queued calls;

adding the capability required by non-off-hook calls to the average processing capability required by calls under conversation, and to the capability required by the queued calls to obtain a sum, wherein the sum is subtracted from the processing capability available from attendants to obtain the remaining processing capability; and

multiplying the remaining processing capability by traffic processing efficiency to obtain a first product, and multiplying the actual person off-hook ratio by the average processing duration of attendants to obtain a second product, and dividing the first product by the second product to obtain the predicted number of called users of the next outbound call period, wherein the traffic processing efficiency is preset.

8. The apparatus according to claim 7, further comprising:

a queuing unit (305), configured to queue the calls if the actual person called user decides to interact with the attendant according to the outbound call information but the attendant is busy.

9. The apparatus according to claim 7, wherein:

the detecting unit (301) is further configured to disconnect the call if the called user that goes off-hook is not an actual person as revealed by the feedback information.


**Patentansprüche**

1. Verfahren zum Verarbeiten von abgehenden Anrufen, das Folgendes umfasst:

Empfangen (101) durch eine Vorrichtung zum Verarbeiten abgehender Anrufe von Rückmeldungsinformationen von einem angerufenen Anwender, nachdem der angerufene Anwender angenommen hat;
Detektieren (102) durch die Vorrichtung zum Verarbeiten abgehender Anrufe, ob der angerufene Anwender, der angenommen hat, eine wirkliche Person ist, in Übereinstimmung mit den Rückmeldungsinformationen; falls der angerufene Anwender, der annimmt, eine wirkliche Person ist, Abspielen von Informationen eines abgehenden Anrufs, die einen Zweck des abgehenden Anrufs führen, für den angerufenen Anwender, der eine wirkliche Person ist; und
Detektieren (103) durch die Vorrichtung zum Verarbeiten abgehender Anrufe, ob der angerufene Anwender, der eine wirkliche Person ist, in Übereinstimmung mit den Informationen des abgehenden Anrufs entscheidet, mit einer Ansprechperson zu interagieren; falls der angerufene Anwender entscheidet, mit einer Ansprechperson nicht zu interagieren, Trennen des Anrufs; ferner **gekennzeichnet durch**:

Detektieren (104) von Parametern, die an einem Prozess eines abgehenden Anrufs beteiligt sind; und
Einstellen (104) der Geschwindigkeit des Erzeugens abgehender Anrufe in Übereinstimmung mit den Parametern;
wobei das Einstellen der Geschwindigkeit abgehender Anrufe in Übereinstimmung mit den Parametern Folgendes umfasst:

Berechnen einer vorhergesagten Anzahl angerufener Anwender einer nächsten Periode abgehender Anrufe in Übereinstimmung mit den detektierten Parametern; und
Beurteilen, ob die Summe der vorhergesagten Anzahl angerufener Anwender der nächsten Periode abgehender Anrufe, der Anzahl von Anrufen, die aktuell nicht angenommen werden, der Anzahl von Anrufen, die aktuell in einer Warteschlange sind, und der Anzahl von Anrufen, die aktuell eine Konversation bilden, größer ist als die Gesamtzahl von Verbindungsleitungen, die aktuell für abgehende Anrufe verfügbar sind; falls die Summe größer ist als die Gesamtzahl von Verbindungsleitungen, ist die Anzahl angerufener Anwender der nächsten Periode abgehender Anrufe gleich einer Differenz, die **durch** Subtrahieren der Summe der Anzahl von Anrufen, die aktuell nicht angenommen werden, der Anzahl von Anrufen die aktuell in einer Warteschlange sind, und der Anzahl von Anrufen, die aktuell eine Konversation bilden, von der Gesamtzahl von Verbindungsleitungen, die aktuell für abgehende Anrufe verfügbar sind, erhalten wird;
falls die Summe kleiner oder gleich der Gesamtzahl von Verbindungsleitungen ist, ist die Anzahl angerufener Anwender der nächsten Periode abgehender Anrufe gleich der vorhergesagten Anzahl angerufener Anwender der nächsten Periode abgehender Anrufe;
wobei das Berechnen der vorhergesagten Anzahl angerufener Anwender der nächsten Periode abgehender Anrufe in Übereinstimmung mit den detektierten Parametern Folgendes umfasst:

Multiplizieren der Periode abgehender Anrufe mit der Gesamtzahl von Ansprechpersonen, die aktuell angemeldet sind, und mit einem Konversationsanteil von Ansprechpersonen, um die Verarbeitungskapazität zu erhalten, die von Ansprechpersonen verfügbar ist, wobei die Periode abgehender Anrufe die Summe der durchschnittlichen Dauer der Weiterleitung des Anrufs zu der Ansprechperson und der durchschnittlichen Verarbeitungsdauer der Ansprechpersonen ist;

Multiplizieren der Anzahl von Anrufen, die aktuell nicht angenommen werden, mit dem Anteil wirklicher Personen, die angenommen haben, und mit der durchschnittlichen Verarbeitungsdauer von Ansprechpersonen, um die von nicht angenommenen Anrufen geforderte Kapazität zu erhalten;

Multiplizieren der Anzahl von Anrufen, die aktuell eine Konversation bilden, mit der durchschnittlichen Verarbeitungsdauer von 1/2 der Ansprechpersonen, um die durchschnittliche Verarbeitungskapazität, die von den eine Konversation bildenden Anrufen gefordert wird, zu erhalten;

Multiplizieren der Anzahl von aktuell in einer Warteschlange befindlichen Anrufen mit der durchschnittlichen Verarbeitungsdauer von Ansprechpersonen, um die Kapazität, die von in einer Warteschlange befindlichen Anrufen gefordert wird, zu erhalten;

Addieren der von nicht angenommenen Anrufen geforderten Kapazität zu der durchschnittlichen Verarbeitungskapazität, die von eine Konversation bildenden Anrufen gefordert wird, und zu der Kapazität, die von den in einer Warteschlange befindlichen Anrufen gefordert wird, um eine Summe zu erhalten, wobei die Summe von der Verarbeitungskapazität, die von Ansprechpersonen verfügbar ist, subtrahiert wird, um die verbleibende Verarbeitungskapazität zu erhalten; und

Multiplizieren der verbleibenden Verarbeitungskapazität mit dem Verkehrsverarbeitungswirkungsgrad, um ein erstes Produkt zu erhalten, und Multiplizieren des Anteils wirklicher Personen, die angenommen haben, mit der durchschnittlichen Verarbeitungsdauer von Ansprechpersonen, um ein zweites Produkt zu erhalten, und Dividieren des ersten Produkts **durch** das zweite Produkt, um eine vorhergesagte Anzahl angerufener Anwender der nächsten Periode abgehender Anrufe zu erhalten, wobei der Verkehrsverarbeitungswirkungsgrad im Voraus festgelegt worden ist.

2. Verfahren nach Anspruch 1, wobei das Empfangen (101) der von dem angerufenen Anwender zurückgeleiteten Rückmeldungsinformationen, nachdem der angerufene Anwender angenommen hat, Folgendes umfasst:

Empfangen von Sprachinformationen, die von dem angerufenen Anwender, der eine wirkliche Person ist, zurückgeleitet werden, nachdem der angerufene Anwender angenommen hat; oder
Empfangen einer im Voraus festgelegten Antwortstimme, die von einer automatischen Antwortvorrichtung abgespielt wird, nachdem die automatische Antwortvorrichtung angenommen hat.

3. Verfahren nach Anspruch 1, das ferner Folgendes umfasst:

Trennen des Anrufs, falls der angerufene Anwender, der angenommen hat, keine wirkliche Person ist, in Übereinstimmung mit den Rückmeldungsinformationen.

4. Verfahren nach Anspruch 1, das ferner Folgendes umfasst:

Leiten des Anrufs zu der Ansprechperson für eine Verarbeitung, falls in Übereinstimmung mit den Informationen des abgehenden Anrufs detektiert wird, dass der angerufene Anwender, der eine wirkliche Person ist, entscheidet, mit der Ansprechperson zu interagieren.

5. Verfahren nach Anspruch 4, wobei das Verfahren dann, wenn in Übereinstimmung mit den Informationen des abgehenden Anrufs detektiert wird, dass der angerufene Anwender, der eine wirkliche Person ist, entscheidet, mit der Ansprechperson zu interagieren, ferner Folgendes umfasst:

Beurteilen, ob die Ansprechperson beschäftigt ist; falls die Ansprechperson beschäftigt ist, Einreihen des Anrufs in eine Warteschlange; falls die Ansprechperson nicht beschäftigt ist, Leiten des Anrufs zu der Ansprechperson zur Verarbeitung.

6. Verfahren nach Anspruch 1, wobei die Parameter, die an dem Prozess des abgehenden Anrufs beteiligt sind, Folgendes umfassen: Durchschnittsdauer der Weiterleitung des Anrufs zu der Ansprechperson und Anteil wirklicher Personen, die angenommen haben, wobei:

die Durchschnittsdauer des Weiterleitens des Anrufs zu der Ansprechperson eine durchschnittliche Dauer von "Erzeugen des abgehenden Anrufs zu dem angerufenen Anwender" bis "der angerufene Anwender, der eine wirkliche Person ist, wählt, den Anruf zu der Ansprechperson weiterzuleiten" ist; und
der Anteil wirklicher Personen, die angenommen haben, ein Anteil der angerufenen Anwender ist, die wirkliche Personen sind, die wählen, den Anruf zu der Ansprechperson weiterzuleiten.

7.  Vorrichtung zum Verarbeiten abgehender Anrufe, die Folgendes umfasst:

eine Detektionseinheit (301), die konfiguriert ist, in Übereinstimmung mit Rückmeldungsinformationen, die von einem angerufenen Anwender zurückgeleitet werden, nachdem der angerufene Anwender angenommen hat, zu detektieren, ob ein angerufener Anwender, der annimmt, eine wirkliche Person ist;
eine Abspieleinheit (302), die konfiguriert ist, Informationen eines abgehenden Anrufs, die einen Zweck des abgehenden Anrufs führen, für den angerufenen Anwender, der eine wirkliche Person ist, abzuspielen, falls die Detektionseinheit bestimmt, dass der angerufene Anwender, der annimmt, eine wirkliche Person ist; und
eine Filterungseinheit (303), die konfiguriert ist, den Anruf zu trennen, falls der angerufene Anwender, der eine wirkliche Person ist, in Übereinstimmung mit den Informationen des abgehenden Anrufs entscheidet, nicht mit einer Ansprechperson zu interagieren; und
ferner **gekennzeichnet durch**
eine Vorhersageeinheit (304), die konfiguriert ist: Parameter, die an einem Prozess eines abgehenden Anrufs beteiligt sind, zu detektieren und die Geschwindigkeit der abgehenden Anrufe in Übereinstimmung mit den Parametern einzustellen, wobei die an dem Prozess des abgehenden Anrufs beteiligten Parameter eine Durchschnittsdauer des Weiterleitens des Anrufs zu der Ansprechperson und einen Anteil wirklicher Personen, die annehmen, enthalten; wobei die Durchschnittsdauer des Weiterleitens des Anrufs zu der Ansprechperson eine durchschnittliche Dauer von "Erzeugen des abgehenden Anrufs zu dem angerufenen Anwender" bis "der angerufene Anwender, der eine wirkliche Person ist, wählt, den Anruf zu der Ansprechperson weiterzuleiten" ist; und
der Anteil wirklicher Personen, die annehmen, ein Anteil der angerufenen Anwender, die wirkliche Personen sind und die wählen, den Anruf zu der Ansprechperson weiterzuleiten, ist;
wobei das Einstellen der Geschwindigkeit abgehender Anrufe in Übereinstimmung mit den Parametern Folgendes umfasst:

Berechnen einer vorhergesagten Anzahl angerufener Anwender einer nächsten Periode abgehender Anrufe in Übereinstimmung mit den detektierten Parametern; und
Beurteilen, ob die Summe der vorhergesagten Anzahl angerufener Anwender der nächsten Periode abgehender Anrufe, der Anzahl von Anrufen, die aktuell nicht angenommen werden, der Anzahl von Anrufen, die aktuell in einer Warteschlange sind, und der Anzahl von Anrufen, die aktuell eine Konversation bilden, größer ist als die Gesamtzahl von Verbindungsleitungen, die aktuell für abgehende Anrufe verfügbar sind;
falls die Summe größer ist als die Gesamtzahl von Verbindungsleitungen, ist die Anzahl angerufener Anwender der nächsten Periode abgehender Anrufe gleich einer Differenz, die **durch** Subtrahieren der Summe der Anzahl von Anrufen, die aktuell nicht angenommen werden, der Anzahl von Anrufen, die aktuell in einer Warteschlange sind, und der Anzahl von Anrufen, die aktuell eine Konversation bilden, von der Gesamtzahl von Verbindungsleitungen, die aktuell für abgehende Anrufe verfügbar sind, erhalten wird;
falls die Summe kleiner oder gleich der Gesamtanzahl von Verbindungsleitungen ist, ist die Anzahl angerufener Anwender der nächsten Periode abgehender Anrufe gleich der vorhergesagten Anzahl angerufener Anwender der nächsten Periode abgehender Anrufe;
wobei das Berechnen der vorhergesagten Anzahl angerufener Anwender der nächsten Periode abgehender Anrufe in Übereinstimmung mit den detektierten Parametern Folgendes umfasst:

Multiplizieren der Periode abgehender Anrufe mit der Gesamtzahl von Ansprechpersonen, die aktuell angemeldet sind, und mit einem Konversationsanteil von Ansprechpersonen, um die Verarbeitungskapazität zu erhalten, die von Ansprechpersonen verfügbar ist, wobei die Periode abgehender Anrufe die Summe der durchschnittlichen Dauer des Weiterleitens des Anrufs zu der Ansprechperson und der durchschnittlichen Verarbeitungsdauer der Ansprechpersonen ist;
Multiplizieren der Anzahl von Anrufen, die aktuell nicht angenommen werden, mit dem Anteil wirklicher Personen, die angenommen haben, und mit der durchschnittlichen Verarbeitungsdauer von Ansprechpersonen, um die von nicht angenommenen Anrufen geforderte Kapazität zu erhalten;
Multiplizieren der Anzahl von Anrufen, die aktuell eine Konversation bilden, mit der durchschnittlichen Verarbeitungsdauer von 1/2 der Ansprechpersonen, um die durchschnittliche Verarbeitungskapazität zu erhalten, die von den eine Konversation bildenden Anrufen gefordert wird;
Multiplizieren der Anzahl von aktuell in einer Warteschlange befindlichen Anrufen mit der durchschnittlichen Verarbeitungsdauer der Ansprechpersonen, um die Kapazität zu erhalten, die von in einer Warteschlange befindlichen Anrufen gefordert wird;

Addieren der Kapazität, die von nicht angenommenen Anrufen gefordert wird, zu der durchschnittlichen Verarbeitungskapazität, die von eine Konversation bildenden Anrufen gefordert wird, und zu der Kapazität, die von den in einer Warteschlange befindlichen Anrufen gefordert wird, um eine Summe zu erhalten, wobei die Summe von der Verarbeitungskapazität, die von Ansprechpersonen verfügbar ist, subtrahiert wird, um die verbleibende Verarbeitungskapazität zu erhalten; und

Multiplizieren der verbleibenden Verarbeitungskapazität mit einem Verkehrsverarbeitungswirkungsgrad, um ein erstes Produkt zu erhalten, und Multiplizieren des Anteils wirklicher Personen, die angenommen haben, mit der durchschnittlichen Verarbeitungsdauer von Ansprechpersonen, um ein zweites Produkt zu erhalten, und Dividieren des ersten Produkts **durch** das zweite Produkt, um eine vorhergesagte Anzahl angerufener Anwender der nächsten Periode abgehender Anrufe zu erhalten, wobei der Verkehrsverarbeitungswirkungsgrad im Voraus festgelegt wird.

**8.** Vorrichtung nach Anspruch 7, die ferner Folgendes umfasst:

eine Warteschlangeneinheit (305), die konfiguriert ist, die Anrufe in eine Warteschlange einzureihen, falls der angerufene Anwender, der eine wirkliche Person ist, in Übereinstimmung mit den Informationen des abgehenden Anrufs entscheidet, mit der Ansprechperson zu interagieren, aber die Ansprechperson beschäftigt ist.

**9.** Vorrichtung nach Anspruch 7, wobei:

die Detektionseinheit (301) ferner konfiguriert ist, den Anruf zu trennen, falls der angerufene Anwender, der angenommen hat, keine wirkliche Person ist, was aus den Rückmeldungsinformationen hervorgeht.

**Revendications**

**1.** Procédé de traitement d'appels sortants, comprenant :

la réception (101), par un appareil de traitement d'appels sortants, d'informations de retour depuis un utilisateur appelé après que l'utilisateur appelé a décroché ;

la détection (102), par l'appareil de traitement d'appels sortants, que l'utilisateur appelé qui décroche est ou non une personne réelle, en fonction des informations de retour ; si l'utilisateur appelé qui décroche est une personne réelle, la reproduction d'informations d'appels sortants qui incluent un but de l'appel sortant vers l'utilisateur appelé qui est une personne réelle ; et

la détection (103), par l'appareil de traitement d'appels sortants, que l'utilisateur appelé qui est une personne réelle décide ou non d'interagir avec un standardiste en fonction des informations d'appels sortants ; si l'utilisateur appelé décide de ne pas interagir avec un standardiste, la déconnexion de l'appel ; **caractérisé en outre par** :

la détection (104) de paramètres impliqués dans un processus d'appel sortant ; et

le réglage (104) de la vitesse de création d'appels sortants en fonction des paramètres ,

dans lequel le réglage de la vitesse des appels sortants en fonction des paramètres comprend :

le calcul d'un nombre prédit d'utilisateurs appelés d'une prochaine période d'appels sortants en fonction des paramètres détectés ; et

le jugement que la somme du nombre prédit d'utilisateurs appelés de la prochaine période d'appels sortants, du nombre d'appels qui ne sont pas actuellement en état de décrochage, du nombre d'appels qui sont actuellement mis en file d'attente, et du nombre d'appels qui sont actuellement en cours de conversation est supérieure ou non au nombre total de liaisons actuellement disponibles pour les appels sortants ; si la somme est supérieure au nombre total de liaisons, le nombre d'utilisateurs appelés de la prochaine période d'appels sortants est égal à une différence obtenue en soustrayant la somme du nombre d'appels qui ne sont pas actuellement en état de décrochage, du nombre d'appels qui sont actuellement mis en file d'attente, et du nombre d'appels qui sont actuellement en cours de conversation du nombre total de liaisons actuellement disponibles pour les appels sortants ;

si la somme est inférieure ou égale au nombre total de liaisons, le nombre d'utilisateurs appelés de la prochaine période d'appels sortants est égal au nombre prédit d'utilisateurs appelés de la prochaine période d'appels sortants ;
dans lequel le calcul du nombre prédit d'utilisateurs appelés de la prochaine période d'appels sortants en fonction des paramètres détectés comprend :

la multiplication de la période d'appels sortants par le nombre total de standardistes actuellement enregistrés, et par un rapport de conversations de standardistes pour obtenir la capabilité de traitement disponible depuis les standardistes, dans lequel la période d'appels sortants est la somme de la durée actuellement moyenne d'acheminement de l'appel au standardiste et de la durée de traitement moyenne des standardistes ;
la multiplication du nombre d'appels qui ne sont pas actuellement décrochés par le rapport de décrochages de personnes réelles, et par la durée de traitement moyenne de standardistes pour obtenir la capabilité requise par des appels non décrochés ;
la multiplication du nombre d'appels qui sont actuellement en cours de conversation par la durée de traitement moyenne de ½ des standardistes pour obtenir la capabilité de traitement moyenne requise par les appels en cours de conversation ;
la multiplication du nombre d'appels actuellement mis en file d'attente par la durée de traitement moyenne de standardistes pour obtenir la capabilité requise par les appels mis en file d'attente ;
l'ajout de la capabilité requise par des appels non décrochés à la capabilité de traitement moyenne requise par des appels en cours de conversation, et à la capabilité requise par les appels mis en file d'attente pour obtenir une somme, la somme étant soustraite de la capabilité de traitement disponible depuis les standardistes pour obtenir la capabilité de traitement restante ; et
la multiplication de la capabilité de traitement restante par le rendement de traitement de trafic pour obtenir un premier produit, et la multiplication du rapport de décrochages de personnes réelles par la durée de traitement moyenne des standardistes pour obtenir un second produit, et la division du premier produit par le second produit pour obtenir le nombre prédit d'utilisateurs appelés de la prochaine période d'appels sortants, dans lequel le rendement de traitement de trafic est préréglé.

2. Procédé selon la revendication 1, dans lequel la réception (101) des informations de retour renvoyées par l'utilisateur appelé après que l'utilisateur appelé a décroché comprend :

la réception d'informations vocales renvoyées par l'utilisateur appelé qui est une personne réelle après que l'utilisateur appelé décroche ; ou
la réception d'une voix de réponse préréglée reproduite par un dispositif de réponse automatique après que le dispositif de réponse automatique décroche.

3. Procédé selon la revendication 1, comprenant en outre :

la déconnexion de l'appel si l'utilisateur appelé qui décroche n'est pas une personne réelle selon les informations de retour.

4. Procédé selon la revendication 1, comprenant en outre :

le routage de l'appel vers le standardiste en vue de son traitement s'il est détecté que l'utilisateur appelé qui est une personne réelle décide d'interagir avec le standardiste en fonction des informations d'appels sortants.

5. Procédé selon la revendication 4, comprenant en outre, s'il est détecté que l'utilisateur appelé qui est une personne réelle décide d'interagir avec le standardiste en fonction des informations d'appels sortants :

le jugement que le standardiste est occupé ou non ; si le standardiste est occupé, la mise en file d'attente de l'appel ; si le standardiste n'est pas occupé, le routage de l'appel vers le standardiste en vue de son traitement.

6. Procédé selon la revendication 1, dans lequel les paramètres impliqués dans le processus d'appel sortant comprennent : la durée moyenne d'acheminement de l'appel vers le standardiste, et le rapport de décrochages de personnes réelles, dans lequel :

la durée moyenne d'acheminement de l'appel vers le standardiste est une durée moyenne depuis la "création de l'appel sortant vers l'utilisateur appelé" jusqu'à la "décision par l'utilisateur appelé qui est une personne réelle d'acheminer l'appel vers le standardiste" ; et

le rapport de décrochages de personnes réelles est un rapport des utilisateurs appelés qui sont des personnes réelles décidant d'acheminer l'appel vers le standardiste.

7. Appareil de traitement d'appels sortants, comprenant :

une unité de détection (301), configurée pour détecter qu'un utilisateur appelé qui décroche est ou non une personne réelle, en fonction d'informations de retour renvoyées par l'utilisateur appelé après que l'utilisateur appelé a décroché ;
une unité de reproduction (302), configurée pour reproduire des informations d'appels sortants qui incluent un but de l'appel sortant vers l'utilisateur appelé qui est une personne réelle si l'unité de détection détermine que l'utilisateur appelé qui décroche est une personne réelle ; et
une unité de filtrage (303), configurée pour déconnecter l'appel si l'utilisateur appelé qui est une personne réelle décide de ne pas interagir avec un standardiste en fonction des informations d'appels sortants ; et **caractérisé en outre par** :

une unité de prédiction (304), configurée pour : détecter des paramètres impliqués dans un processus d'appel sortant, et régler la vitesse des appels sortants en fonction des paramètres, dans lequel les paramètres impliqués dans le processus d'appel sortant comprennent la durée moyenne d'acheminement de l'appel vers le standardiste, et le rapport de décrochages de personnes réelles, dans lequel :

la durée moyenne d'acheminement de l'appel vers le standardiste est une durée moyenne depuis la "création de l'appel sortant vers l'utilisateur appelé" jusqu'à la "décision par l'utilisateur appelé qui est une personne réelle d'acheminer l'appel vers le standardiste" ; et
le rapport de décrochages de personnes réelles est un rapport des utilisateurs appelés qui sont des personnes réelles décidant d'acheminer l'appel vers le standardiste ;
dans lequel le réglage de la vitesse des appels sortants en fonction des paramètres comprend :

le calcul d'un nombre prédit d'utilisateurs appelés d'une prochaine période d'appels sortants en fonction des paramètres détectés ; et
le jugement que la somme du nombre prédit d'utilisateurs appelés de la prochaine période d'appels sortants, du nombre d'appels qui ne sont pas actuellement en état de décrochage, du nombre d'appels qui sont actuellement mis en file d'attente, et du nombre d'appels qui sont actuellement en cours de conversation est supérieure ou non au nombre total de liaisons actuellement disponibles pour les appels sortants ; si la somme est supérieure au nombre total de liaisons, le nombre d'utilisateurs appelés de la prochaine période d'appels sortants est égal à une différence obtenue en soustrayant la somme du nombre d'appels qui ne sont pas actuellement en état de décrochage, du nombre d'appels qui sont actuellement mis en file d'attente, et du nombre d'appels qui sont actuellement en cours de conversation du nombre total de liaisons actuellement disponibles pour les appels sortants ;
si la somme est inférieure ou égale au nombre total de liaisons, le nombre d'utilisateurs appelés de la prochaine période d'appels sortants est égal au nombre prédit d'utilisateurs appelés de la prochaine période d'appels sortants ;
dans lequel le calcul du nombre prédit d'utilisateurs appelés de la prochaine période d'appels sortants en fonction des paramètres détectés comprend :

la multiplication de la période d'appels sortants par le nombre total de standardistes actuellement enregistrés, et par un rapport de conversation de standardistes pour obtenir la capabilité de traitement disponible depuis les standardistes, dans lequel la période d'appels sortants est la somme de la durée moyenne d'acheminement de l'appel au standardiste et de la durée de traitement moyenne des standardistes ;
la multiplication du nombre d'appels qui ne sont pas actuellement décrochés par le rapport de décrochages de personnes réelles, et par la durée de traitement moyenne de standardistes pour obtenir la capabilité requise par des appels non décrochés ;
la multiplication du nombre d'appels qui sont actuellement en cours de conversation par la durée de traitement moyenne de ½ des standardistes pour obtenir la capabilité de traitement moyenne requise par les appels en cours de conversation ;
la multiplication du nombre d'appels actuellement mis en file d'attente par la durée de traitement moyenne de standardistes pour obtenir la capabilité requise par des appels mis en file d'attente ;

l'ajout de la capabilité requise par des appels non décrochés à la capabilité de traitement moyenne requise par des appels en cours de conversation, et à la capabilité requise par les appels mis en file d'attente pour obtenir une somme, la somme étant soustraite de la capabilité de traitement disponible depuis les standardistes pour obtenir la capabilité de traitement restante ; et

la multiplication de la capabilité de traitement restante par le rendement de traitement de trafic pour obtenir un premier produit, et la multiplication du rapport de décrochages de personnes réelles par la durée de traitement moyenne des standardistes pour obtenir un second produit, et la division du premier produit par le second produit pour obtenir le nombre prédit d'utilisateurs appelés de la prochaine période d'appels sortants, dans lequel le rendement de traitement de trafic est préréglé.

8. Appareil selon la revendication 7, comprenant en outre :

une unité de mise en file d'attente (305), configurée pour mettre en file d'attente les appels si l'utilisateur appelé qui est une personne réelle décide d'interagir avec le standardiste en fonction des informations d'appels sortants mais le standardiste est occupé.

9. Appareil selon la revendication 7, dans lequel :

l'unité de détection (301) est configurée en outre pour déconnecter l'appel si l'utilisateur appelé qui décroche n'est pas une personne réelle comme indiqué par les informations de retour.

Receive feedback information from a called user
after the called user goes off-hook

101

Detect whether the called user who goes off-
hook is an actual person according to the
feedback information; if so, play outbound call
information that carries purposes of the outbound
call to the called user that is an actual person

102

Detect, whether the called user that is an actual
person decides to interact with the
representative according to the outbound call
information; if not, disconnect the call

103

Detect parameters of the outbound call
process, and adjust the outbound call
speed according to the parameters

104

FIG. 1

Call
failure

Originate an
outbound call

The call fails because the
user is busy, powered off or
outside the service area

The phone
of the called
user rings

The call fails because the user
rejects the call or makes no answer

Average duration of forwarding a
call to an attendant

Find that the call is answered
by an automatic response
device such as fax machine,
modem, and responder

The called user goes off-
hook and is identified

Forward the call to IVR

The called user releases the
call in the call process

Forward the call to an
attendant and put it into a
queue if the attendant is
busy

The called user releases the
call during queuing

Connect the call up to
the attendant

The call is completed

End of postprocessing of
the attendant

FIG. 2

304
Predicting
unit

301
Detecting
unit

302
Playing
unit

303
Filtering
unit

305
Queuing
unit

FIG. 3

Apparatus for
processing
outbound calls

401

Attendant

402

FIG. 4

**EP 2 312 819 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050096912 A1